# EUROPÄISCHE PATENTANMELDUNG

(11) **EP 4 692 972 A1**
(43) Veröffentlichungstag der Anmeldung: **11.02.2026**
(21) Anmeldenummer: 25188116.5
(22) Anmeldetag: 08.07.2025
(51) Int. Cl.: G05B 23/02

(54) **AUTOMATISCHES ERKENNEN EINER ANOMALIE IN EINEM MASCHINENBETRIEB**

(30) Priorität: 07.08.2024 DE 102024122525
(71) Anmelder: Krones AG, 93073 Neutraubling (DE)
(72) Erfinder: Langwieser, Sebastian, 93073 Neutraubling (DE); Zoelfl, Markus, 93073 Neutraubling (DE); Ramsauer, Dominik, 93073 Neutraubling (DE)
(74) Vertreter: Grünecker Patent- und Rechtsanwälte PartG mbB

(57) **Zusammenfassung**

Die Erfindung betrifft ein Verfahren, eine Computervorrichtung und ein System zum automatischen Erkennen einer Anomalie in einem Maschinenbetrieb. Der Maschinenbetrieb ist insbesondere von Maschinen zum Abfüllen und Verpacken von Lebensmitteln und/oder Getränken. Die Anomalie-Erkennung umfasst dabei die Erfassung von Sensordaten, die automatische Kategorisierung dieser Daten nach Betriebszuständen und die Extraktion relevanter Features für jede Kategorie von Betriebszuständen. Schwellwerte werden mithilfe statistischer Verfahren festgelegt, um präzise Betriebsgrenzen zu definieren. Dieses Modell wird überwacht und angepasst, um frühzeitig auf Anomalien zu reagieren und die Betriebssicherheit zu gewährleisten. Durch die Erfindung wird ein robustes Überwachungssystem geschaffen, das es ermöglicht, den Zustand des Maschinensystems in Echtzeit zu überwachen und frühzeitig auf abweichende Betriebsbedingungen zu reagieren. Dies trägt zur Erhöhung der Betriebssicherheit, Vermeidung von Ausfallzeiten und Optimierung der Wartungsprozesse bei.

## Beschreibung

Die Erfindung betrifft ein Verfahren, eine Computervorrichtung und ein System zum automatischen Erkennen einer Anomalie in einem Maschinenbetrieb, insbesondere für Maschinen zum Abfüllen und Verpacken von Lebensmitteln und/oder Getränken.

Das Überwachen von Maschinensystemen und eines laufenden Maschinenbetriebs ist ein wichtiger Bestandteil der industriellen Produktion und insbesondere wichtig bei der Instandhaltung. Dabei ist es unerlässlich, den Betriebszustand der Maschinen kontinuierlich zu überwachen, um frühzeitig Anomalien zu erkennen, die auf mögliche Fehlfunktionen oder bevorstehende Ausfälle hinweisen. Traditionell wird die Überwachung von Maschinensystemen durch periodische manuelle Inspektionen und einfache Alarmsysteme realisiert, die auf festgelegte Schwellenwerte reagieren. Diese Verfahren stoßen jedoch zunehmend an ihre Grenzen, insbesondere in komplexen und dynamischen Produktionsumgebungen. Eine solche Produktionsumgebung ist beispielsweise in einer Maschinenlinie für das Verpacken und Abfüllen von Nahrungsmitteln, wie etwa Getränken gegeben.

Herkömmliche Ansätze zur Überwachung von Maschinensystemen basieren meist auf zeitgesteuerten Inspektionen und Wartungsmaßnahmen. Dabei führen Techniker regelmäßige Kontrollen durch, um beispielsweise sichtbare Verschleißerscheinungen und Auffälligkeiten zu identifizieren. Diese Herangehensweise ist jedoch zeitaufwendig und nicht immer zuverlässig, da viele potenzielle Probleme erst spät erkannt werden können, wenn sie bereits zu Schäden, einem ineffizienten Betrieb oder gar zu Ausfällen geführt haben.

Ein weiterer bekannter Ansatz ist die Verwendung von einfachen Alarmsystemen, die auf festgelegte Schwellwerte reagieren. Beispielsweise können Temperatur- oder Vibrationssensoren Alarm schlagen, wenn bestimmte Grenzwerte überschritten werden. Diese Systeme sind jedoch oft nicht in der Lage, subtile Anomalien zu erkennen, die auf schleichende Verschlechterungen hindeuten. Zudem erfordern sie eine manuelle Festlegung der Schwellwerte, die nicht immer optimal auf die spezifischen Bedingungen und Anforderungen der jeweiligen Anwendung abgestimmt sind.

Es besteht daher Bedarf für verbesserte Verfahren, Computervorrichtungen und Systeme zum automatischen und generischen Erkennen einer Anomalie in einem Maschinenbetrieb.

Die Aufgabe wird erfindungsgemäß durch Verfahren gemäß Anspruch 1, eine Computervorrichtung gemäß Anspruch 9 und ein System gemäß Anspruch 10 gelöst. Ausführungsformen und Weiterbildungen sind in den Unteransprüchen erfasst.

Eine Ausführungsform der Erfindung betrifft ein Verfahren zum automatischen Erkennen einer Anomalie in einem Maschinenbetrieb. Der Maschinenbetrieb kann insbesondere für Maschinen zum Abfüllen und Verpacken von Lebensmitteln und/oder Getränken sein. Das Verfahren umfasst einen ersten Schritt in dem Signale der Maschine über einen vorbestimmten Referenzzeitraum erfasst werden. Die erfassten Signale sind somit Zeitreihendaten der Maschine. Es folgt dann ein automatisches Kategorisieren der erfassten Signale in eine Vielzahl von Prozesstyp-Gruppen. Das Kategorisieren basiert auf Prozessvariablen. Beispielsweise können die erfassten Variablen basierend auf Betriebszuständen der Maschine automatisch kategorisiert werden. Dies kann durch die Analyse der Betriebsbedingungen und die Zuordnung der Daten zu entsprechenden Kategorien erfolgen.

Danach können Merkmale für jede der Prozesstyp-Gruppen bestimmt werden. Dies entspricht einer sogenannten "Feature-Extraktion". Dabei werden aus den kategorisierten Daten relevante Merkmale (Features) extrahiert. Diese Merkmale können statistische Kennwerte wie Mittelwerte, Varianzen, Peaks, Frequenzkomponenten etc. umfassen. Anschließend kann dabei eine Korrelationsanalyse der extrahierten Merkmale durchgeführt werden, um Zusammenhänge und Abhängigkeiten zwischen den Variablen/Signalen zu identifizieren.

Im nächsten Schritt des Verfahrens werden Schwellwerte für jedes der bestimmten Merkmale für jede der Prozesstyp-Gruppen bestimmt. Da die Merkmale statistisch gesehen normalisiert sind, können sich diese Schwellwerte für Merkmale aller Signale automatisch festsetzen lassen. Das kann im Verfahren eine Erleichterung gegenüber des manuellen Festsetzen von Schwellwerten auf den ursprünglichen Signalen darstellen. Diese Schwellwerte definieren die normalen Betriebsgrenzen des Systems. Das daraus resultierende Modell kann in der Maschine implementiert werden und optional kontinuierlich überwacht und bei Bedarf nachtrainiert werden, um Veränderungen im Systemverhalten zu berücksichtigen.

Die Signale der Maschine werden dann im laufenden Betrieb der Maschine basierend auf den ermittelten Schwellwerten der bestimmten Merkmale ständig überwacht. Wenn ein Signal (oder mehrere Signale) der Maschine im laufenden Betrieb einen der Schwellwerte erreicht, kann eine Anomalie des Maschinenbetriebs erkannt werden. Beispielsweise kann mindestens eine Anomalie erkannt werden, wenn ein Merkmal den Schwellwert erreicht, oder wenn mindestens die Hälfte der Merkmale ihre entsprechenden Schwellwerte erreichen, oder wenn alle Merkmale ihre entsprechenden Schwellwerte erreichen, etc. So lässt sich eine Empfindlichkeit des Verfahrens einstellen. Die Erkennung der Anomalie kann zu einer entsprechenden Meldung einer Bedienperson führen.

Weitere Ausführungsformen betreffen eine Computervorrichtung und ein System, in denen obige Aufgabe gelöst wird.

Beispielhafte Aspekte der Erfindung sind in den Zeichnungen dargestellt. Es zeigen:
**Figur 1****:** ein Ablaufdiagramm, das ein beispielhaftes Verfahren zum automatischen Erkennen von Anomalien zeigt;
**Figur 2****:** ein beispielhaftes Histogramm zeigt, in dem Schwellwerte für die Anomalieüberwachung eingezeichnet sind;
**Figur 3****:** eine beispielhafte Anlagenkonfiguration für PET-Behälter und Klebegebinde;
**Figur 4****:** eine beispielhafte Anlagenkonfiguration für PET-Behälter und Schrumpfpacker;
**Figur 5****:** eine beispielhafte Anlagenkonfiguration für Dosen oder Glasflaschen; und
**Figur 6****:** eine beispielhafte Anlagenkonfiguration für Dosen.

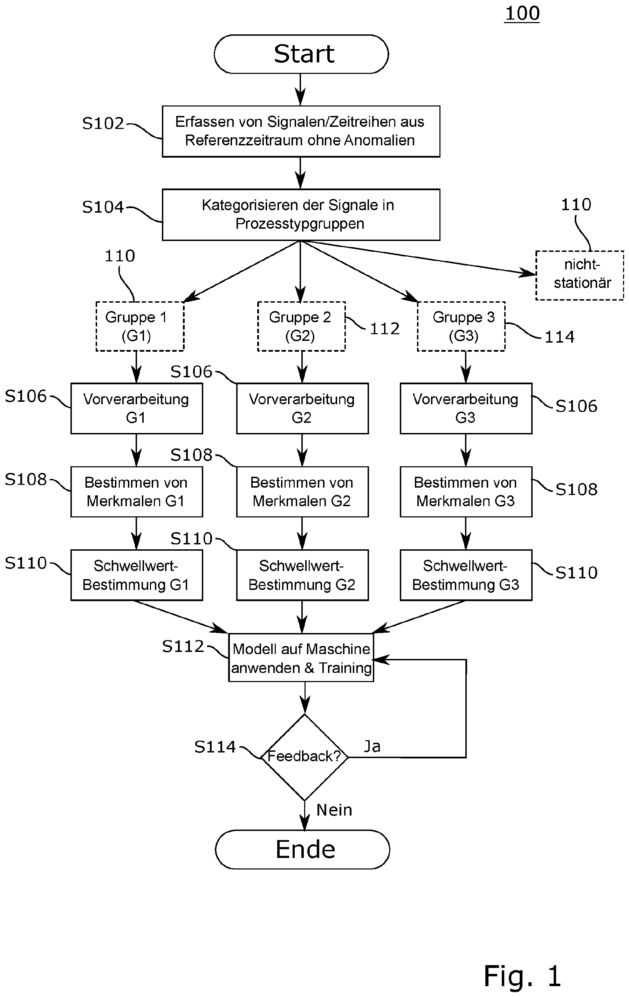

In Figur 1 ist ein beispielhaftes Verfahren gezeigt, mit dem Anomalien in einem Maschinenbetrieb automatisch und intelligent erfasst, detektiert und gemeldet werden können.

In einem ersten Schritt S102 werden Signale aus einem Referenzzeitraum erfasst. Dabei können beispielsweise kontinuierlich Daten von verschiedenen Sensoren und Messgeräten des Maschinensystems während eines definierten Referenzzeitraums erfasst werden. Diese Variablen können verschiedene physikalische Größen wie Temperatur, Stromaufnahme, Druck, Vibrationen etc. umfassen. Die Erfassung dieser Sensorsignale über den Referenzzeitraum hinweg ergibt somit verschiedene Zeitreihendaten von verfügbaren Sensordaten. Die Daten können beispielsweise aus den Sensoren ausgelesen werden und in einer Datenbank zur späteren Analyse gespeichert werden.

Der Referenzzeitraum kann beispielsweise manuell festgelegt werden. Vorzugsweise wird der Referenzzeitraum so gewählt, dass die Aufzeichnung der Sensordaten einen Maschinenbetrieb betreffen, in dem es zu keinen Anomalien im Betrieb kommt. Dies kann beispielsweise eine normale Produktionsphase über einen längeren Zeitraum sein, wie beispielsweise über mehrere Wochen, um eine bestimmte Menge von Zeitreihendaten zu erzeugen. Durch einen Referenzzeitraum, der groß genug ist, wird sichergestellt, dass verschiedene Prozessabhängigkeiten mit in den Sensorsignalen enthalten sind, wie beispielsweise verschiedene Betriebszustände, Leerlaufzustände, Wartungszustände, Reinigungsphasen, unterschiedliches Bedienpersonal und/oder verschiedene Produktverarbeitungen. In alternativen Ausführungsformen kann die Auswahl an Referenzzeiträumen auch dynamisch geschehen. Dadurch wird der Referenzzeitraum kontinuierlich als ein Sliding-Window immer wieder mitgezogen.

Durch das Aufzeichnen/Erfassen der Sensorsignale während des Referenzzeitraums, wird eine große Datenmenge an Zeitreihendaten erschaffen. Beispielsweise können an einer Maschine in einer Abfüllanlage durchaus 4000 Signale erzeugt werden, die über den Referenzzeitraum in Zeitreihendaten aufgezeichnet werden, wie beispielsweise Temperaturwerte einzelner Stationen bis hin zu Zustandsdaten einzelner Module in der Maschine und so weiter.

Diese Signale bzw. Zeitreihendaten werden dann in Schritt S104 in verschiedene Prozesstypgruppen kategorisiert. Diese Kategorisierung basiert auf Prozessvariablen, wodurch die aufgezeichneten Zeitreihendaten beispielsweise in verschiedene Betriebsmodi und (Produktions-) Prozessschritte unterteilt werden. Dies kann automatisch erfolgen und entspricht einer Einordnung der Signale in verschiedene Verhaltensweisen der Maschine. Somit können die Signale in verschiedene Zeitbereiche eingeteilt werden, wie beispielsweise ein laufender Betriebszustand der Maschine, Leerlaufdaten der Maschine etc. Die Kategorisierung kann beispielsweise durch eine Analyse der Betriebsbedingungen und die Zuordnung der Daten zu entsprechenden Kategorien erfolgen.

Prinzipiell werden für die Anomalie-Detektion nur solche Daten verwendet, die ein stationäres Verhalten aufweisen, also die ein natürlich oszillierendes Signal darstellen. Beispielsweise kann dafür ein "augmented Dickey-Fuller test (ADF)" herangezogen werden, um zu testen, ob es sich bei den Zeitreihendaten um ein stationäres Signal handelt, oder ob es sich um ein nicht-stationäres Signal handelt, wie beispielsweise um Zählerdaten. Nichtstationäre Signale/Daten 110 können verworfen werden, da diese im weiteren Prozess keine Rolle spielen.

Alle anderen, d.h. stationären Signale/Zeitreihendaten werden entsprechend der Kategorisierung in die verschiedenen Gruppen 1 bis 3 eingeteilt (Gruppen 110 bis 114). Die Gruppen 1 bis 3 sind dabei nur exemplarisch und es können auch mehr oder weniger Gruppen vorhanden sein. Beispielsweise kann es auch nur eine einzige Gruppe geben.

Optional kann in Schritt S106 eine Vorverarbeitung der Zeitreihendaten der einzelnen Gruppen G1 bis G3 geben. In der Vorverarbeitung können die Daten beispielsweise bereinigt werden, was ein Auffüllen oder Entfernen von nicht-vorhandenen Daten entspricht, oder ein Resampling der Daten kann durchgeführt werden. Weiterhin können die einzelnen Gruppen auch nach vordefinierten Kriterien wie Betriebszustände/-programme, Geschwindigkeitsfenster, etc. gefiltert oder eingeteilt werden. Die Vorverarbeitung in S106 ist beispielsweise ein rein datengetriebenes Verfahren, in dem die Daten so aufgearbeitet werden, dass jedes Signal eine ähnliche Datenstruktur aufweist.

In Schritt S108 werden aus den verschiedenen Gruppen G1 bis G3 Merkmale bestimmt (Feature-Extraktion). Hierbei erfolgt zunächst die Feature-Extraktion aus den erfassten Rohdaten der Sensordaten. Diese Rohdaten, welche kontinuierlich von den verschiedenen Sensoren erfasst werden, können beispielsweise in feste Zeitfenster unterteilt sein. Dies kann beispielsweise Teil der Vorverarbeitung in Schritt S106 sein. Für jedes dieser Zeitfenster werden dann spezifische statistische Merkmale extrahiert, die als Merkmale dienen. Diese Merkmale bilden die Grundlage für die spätere Korrelationsanalyse und Modellbildung.

Diese Merkmalsbestimmung entspricht einer statistischen Aufbereitung des Ursprungssignals, wie beispielsweise der Verlauf einer Standardabweichung des Signals. Beispielsweise können die bestimmten Merkmale (d.h. die extrahierten Features) statistische Kennwerte wie Mittelwerte, Varianzen, Peaks, Frequenzkomponenten etc. umfassen. Dabei kann eine Korrelationsanalyse der extrahierten Features durchgeführt werden, um Zusammenhänge und Abhängigkeiten zwischen den Variablen oder den einzelnen Signalen zu identifizieren. Die Korrelationsanalyse kann dabei über statistische Signifikanz zu einem Ausschluss einzelner Merkmale führen. Nach dem Festlegen eines Signifikanzniveaus können beispielsweise nicht-signifikante Merkmale verworfen werden.

Die so extrahierten Feature-Zeitreihen bilden die Grundlage einer tieferen Analyse und Überwachung des Maschinensystems. Diese tiefere Analyse der Merkmale ermöglicht es auch, Maschinen vergleichbaren Typs zu vergleichen, da die Merkmale gegenüber den ursprünglichen Signalen robuster sind. Das Wiederum lässt Kenntnisse gewinnen, wie das Verfahren konkret eingestellt werden sollte. Sie bieten Einblicke in die normalen Betriebsbedingungen und helfen, Abweichungen frühzeitig zu erkennen. Durch die Identifizierung von Korrelationen zwischen den Features können komplexe Zusammenhänge und potenzielle Ursachen von Anomalien aufgedeckt werden.

Wenn die Feature-Zeitreihen der einzelnen Gruppen G1 bis G3 erstellt sind, können in Schritt S110 entsprechende Schwellwerte für jede der Gruppen G1 bis G3 bestimmt werden. Die Festlegung oder Bestimmung von Schwellwerten für die überwachten Signale dient dazu, Anomalien und potenzielle Fehlfunktionen zuverlässig zu erkennen. Diese Schwellwerte definieren die Betriebsgrenzen, innerhalb derer sich das Maschinensystem im Normalzustand befindet. Zur Schwellwertsetzung können verschiedene statistische Verfahren eingesetzt werden, die auf statistischen Analysen der gemessenen Daten basieren und müssen daher nicht zwangsläufig händisch festgesetzt werden.

Ein Ansatz gemäß Ausführungsformen der Erfindung besteht darin, Histogramme der erfassten Sensordaten zu erstellen und die Verteilung der Daten zu analysieren.

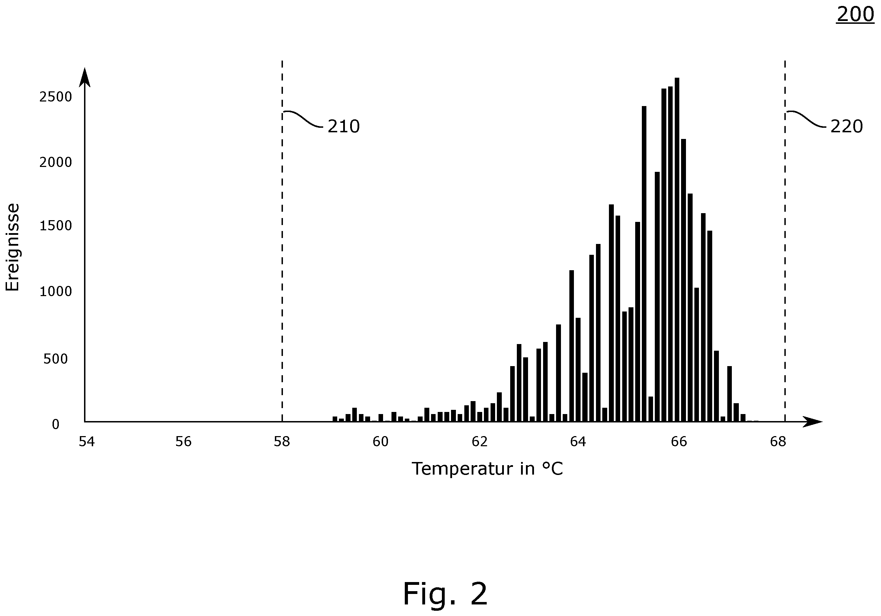

Bei symmetrischen Verteilungen der Sensorwerte, wie der Gauss-Verteilung, können Schwellwerte gesetzt werden, indem vom Mittelwert ausgehend eine oder mehrere Standardabweichungen in beide Richtungen addiert oder subtrahiert wird. Dieses Verfahren funktioniert jedoch nicht optimal bei asymmetrischen Verteilungen, wie im Beispiel einer rechtsschiefen Signalverteilung, wie beispielsweise bei der in Figur 2 gezeigten Temperaturverteilung. Hier wäre ein solcher Ansatz auf der rechten Seite durchaus sinnvoll, während er auf der linken Seite weniger geeignet wäre, da die Verteilung dort flacher ausfällt.

Das beispielhafte Histogramm in Figur 2 zeigt die Verteilung einer möglichen Temperaturmessungen. Die Temperaturwerte könnten zum Beispiel von einem Sensor an einem bestimmten kritischen Punkt in einer Abfüllanlage gemessen worden sein. Wie in Figur 2 zu sehen, ist die Verteilung linksschief, was bedeutet, dass der Großteil der Messwerte tendenziell höhere Temperaturen aufweist. In einem solchen Fall ist der Modus (der häufigste Wert) weiter rechts verschoben.

Um auch bei asymmetrischen Verteilungen präzise Schwellwerte zu setzen, kann beispielsweise eine Kerndichteschätzung ("Kernel Density Estimation", KDE) durchgeführt werden. Mit dem KDE-Verfahren kann die Dichteverteilung der Daten geschätzt werden, wodurch die Form der Verteilung besser erfasst wird. Dieses Verfahren ermöglicht es, Schwellwerte auch bei nicht-normalverteilten Daten zuverlässig zu bestimmen. Rein Beispielhaft sind in Figur 2 zwei Schwellwerte gezeigt, die vom System auf diese Art festgesetzt wurden, d.h. ein unterer Schwellwert 210 bei 58,0°C und ein oberer Schwellwert 220 bei 68,2°C. Diese Schwellwerte sind nur beispielhaft.

Durch die Anwendung der Kerndichteschätzung können die Grenzen, die die normalen Betriebsbedingungen des Systems definieren, präzise bestimmt werden. Diese Technik berücksichtigt die tatsächliche Verteilung der Daten und ermöglicht eine flexible und genaue Schwellwertsetzung, die an die spezifischen Eigenschaften der gemessenen Variablen angepasst ist.

Die Gesamtzahl der so bestimmten Schwellwerte für die verschiedenen Features in den einzelnen Gruppen bildet damit ein Modell der Maschinenanlage, das implementiert werden kann, um die Maschine zu überwachen und auf generische Weise Anomalien zu erkennen. Dies geschieht in Schritt S112, in welchem das Modell auf die entsprechende Maschine angewendet wird. Die Implementierung des Modells kann beispielsweise eine Konfigurationsdatei umfassen, in welcher alle Schwellwerte und Gruppierungsmöglichkeiten festgesetzt sind.

Die Konfigurationsdatei bzw. das Modell kann dabei beispielsweise in eine Steuerung oder eine Computervorrichtung implementiert werden, die mit der Maschine funktionell verbunden ist. Die Computervorrichtung umfasst dabei wenigstens Standardkomponenten, wie Speicher, Prozessor, Ein- und Ausgabeeinheiten, wenigstens eine Netzwerkschnittstelle etc. Die Computervorrichtung kann die relevanten Signale der Maschine somit im laufenden Betrieb der Maschine basierend auf den ermittelten Schwellwerten der bestimmten Merkmale überwachen. Wenn ein Signal der Maschine im laufenden Betrieb einen der Schwellwerte erreicht (z.B. überschreitet oder unterschreiten), wird eine Anomalie des Maschinenbetriebs erkannt und kann an eine Bedienperson gemeldet werden.

Die Meldung oder Benachrichtigung der Bedienperson erfolgt dabei durch eine logisch interpretierbare Aussage an die Bedienperson, wie beispielsweise "Die Temperatur in Modul X ist höher als normal". Dies kann von der Bedienperson dann gezielt behoben werden, bevor es zu Schäden oder Ausfällen kommt.

In Schritt S114 kann optional ein Feedback von der Maschine erhalten werden, welches für ein Training des Modells in Zusammenhang mit Schritt S112 verwendet werden kann.

In einigen Ausführungsformen können statt der Anomalie-Meldung an eine Bedienperson (oder auch zusätzlich zu der Meldung) ein oder mehrere Steuerparameter der Maschine automatisch angepasst werden, um auf eine Anomalie zu reagieren. Beispielsweise kann das Modell bereits zusätzliche Maßnahmen/Steuerstrukturen enthalten, was bei Erreichen von bestimmten Schwellwerten zu unternehmen ist.

Einige Beispiele in einer Getränkeabfüllanlage, in denen die Ausführungsformen der Erfindung implementiert werden können, sind beispielsweise eine Überwachung einer Durchflussmenge, eine Leerlaufüberwachung für einen Servo-Antrieb, ein Kettenantrieb für eine Reinigungsmaschine, eine Temperaturüberwachung für Reinigungsmaschine, und/oder eine Schwingungsanalyse einer Blasmaschine.

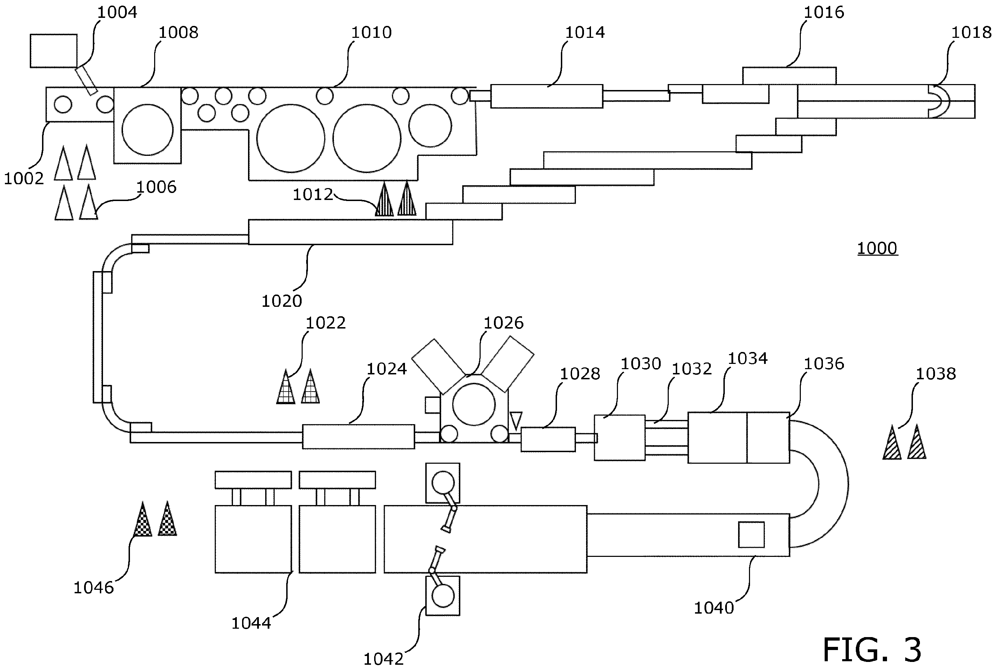

In den folgenden Figuren 3 bis 6 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 3 bis 6 soll nur eine allgemeine Übersicht über Maschinen geben, in denen die generische Anomalieerkennung implementiert werden kann.

Grundsätzlich nutzen moderne Systeme, wie sie in Figuren 3 bis 6 gezeigt sind, eine Vielzahl von Sensoren, um kontinuierlich Daten zu erfassen und in Echtzeit zu analysieren. Diese Daten umfassen eine breite Palette von Messgrößen wie Temperatur, Druck, Stromaufnahme, Vibrationen und mehr.

Figur 3 zeigt eine beispielhafte Anlagenkonfiguration 1000 für PET-Flaschen oder PET-Behälter und Klebegebinde. Wie in Figur 3 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfernen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer 1044 auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

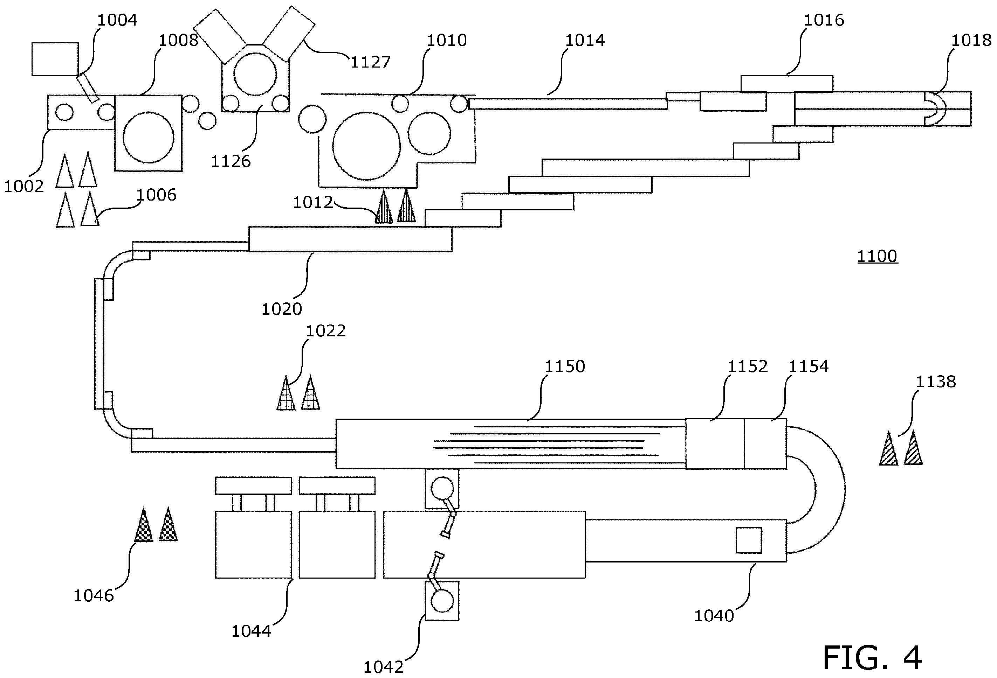

Figur 4 zeigt eine weitere beispielhafte Anlagenkonfiguration 1100 für PET-Behälter und Schrumpfpacker. Die Anlage 1100 aus Figur 4 umfasst viele der Module und Maschinen aus der Anlagenkonfiguration 1000 aus Figur 3, jedoch gibt es einige Unterschiede. Auf die Beschreibung der Module, die bereits in Zusammenhang mit Figur 3 beschrieben sind, wird daher für Figur 4 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

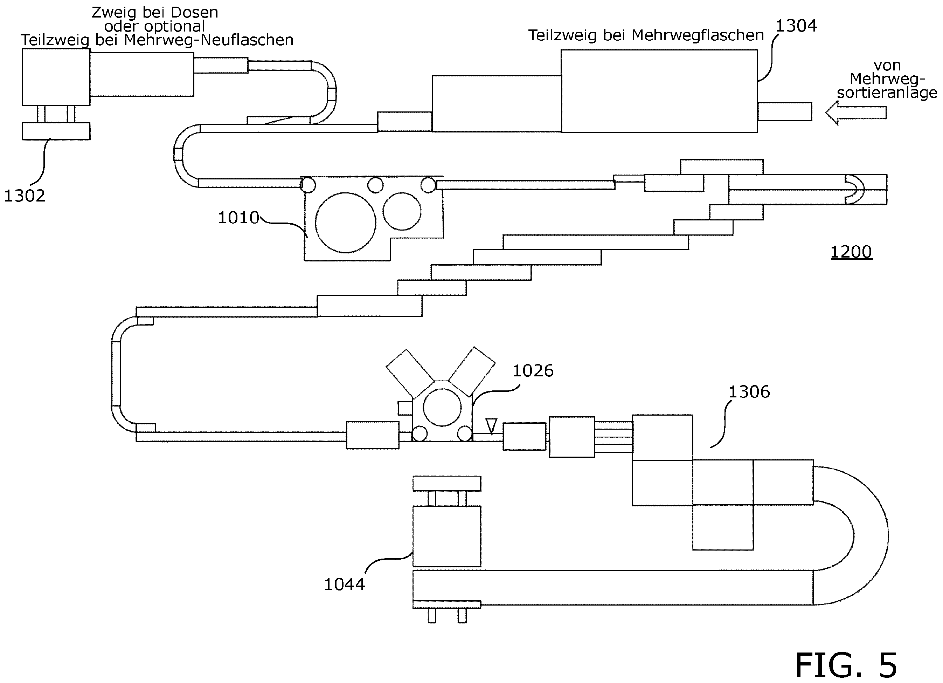

Figur 5 zeigt eine beispielhafte Anlagenkonfiguration 1200 für Dosen oder Glasflaschen. Die beispielhafte Anlagenkonfiguration 1200 aus Figur 5 hat wieder einige Ähnlichkeiten zu den Anlagenkonfigurationen 1000 und 1100 aus Figuren 3 und 4 und die Beschreibung der Anlagenkonfiguration beschränkt sich daher auf die Unterschiede der Anlagenkonfigurationen.

Wie in Figur 5 gezeigt, kann die beispielhafte Anlagenkonfiguration zwei separate Zuführungen umfassen. Eine erste Zufuhr, links in Figur 5, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 5, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

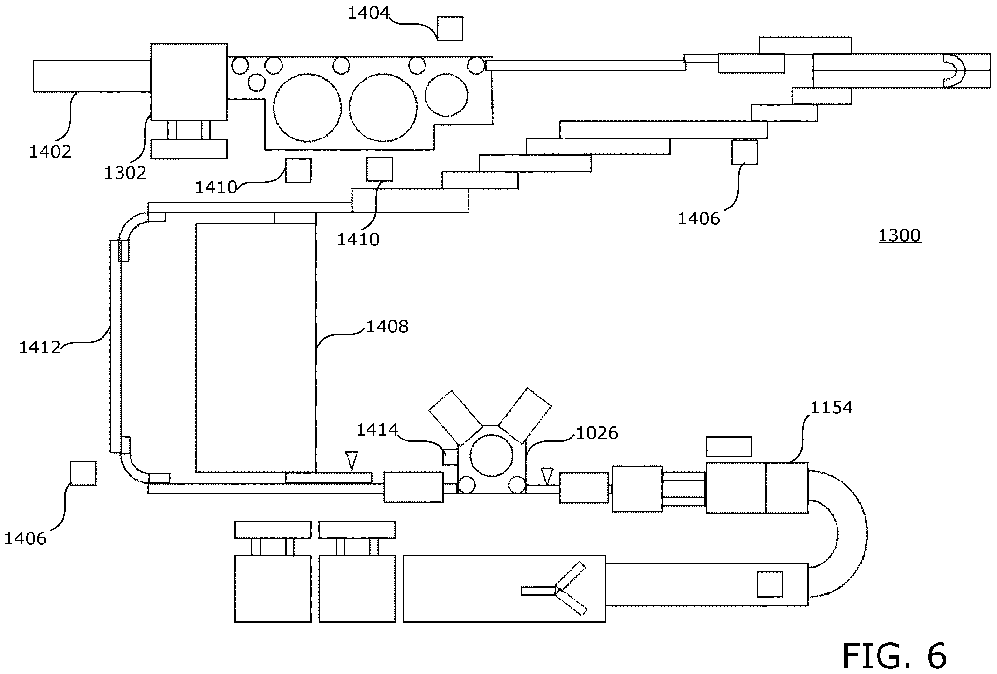

Figur 6 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Verfahren zum automatischen Erkennen einer Anomalie in einem Maschinenbetrieb, insbesondere für Maschinen zum Abfüllen und Verpacken von Lebensmitteln und/oder Getränken, wobei das Verfahren umfasst:
Erfassen (S102) von Signalen der Maschine über einen vorbestimmten Referenzzeitraum, wobei die erfassten Signale Zeitreihendaten der Maschine sind;
automatisches Kategorisieren (S104) der erfassten Signale in eine Vielzahl von Prozesstyp-Gruppen, wobei das Kategorisieren basierend auf Prozessvariablen erfolgt;
Bestimmen (S108) von Merkmalen für jede der Prozesstyp-Gruppen;
Ermitteln (S110) von wenigstens einem Schwellwert für jedes der bestimmten Merkmale für jede der Prozesstyp-Gruppen; und
Überwachen von Signalen der Maschine im laufenden Betrieb der Maschine basierend auf den ermittelten Schwellwerten der bestimmten Merkmale; und
wenn ein Signal der Maschine im laufenden Betrieb einen der Schwellwerte erreicht,
Erkennen einer Anomalie des Maschinenbetriebs.

2. Verfahren nach Anspruch 1, des Weiteren umfassend:
Anpassend von wenigstens einem Steuerparameter der Maschine basierend auf der erkannten Anomalie.

3. Verfahren nach Anspruch 1 oder 2, des Weiteren umfassend:
Vorverarbeiten der kategorisierten Signale, umfassend:
Einteilen der Zeitreihendaten in gleich große Fenster, und
Bereinigen der Daten.

4. Verfahren nach einem der Ansprüche 1 bis 3, wobei das automatische Kategorisieren der erfassten Signale in die Vielzahl von Prozesstyp-Gruppen datengetrieben ist und des Weiteren umfasst:
Testen der erfassten Zeitreihendaten, ob die Signale stationär sind oder nicht;
Verwerfen von nicht-stationären Zeitreihendaten; und
Einteilen der restlichen Zeitreihendaten in die Prozesstyp-Gruppen basierend auf einer oder mehreren Prozessvariablen, wobei die eine oder mehreren Prozessvariablen eine aktuelle Betriebsart der Maschine beschreibt.

5. Verfahren nach einem der Ansprüche 1 bis **4,** wobei das Bestimmen von Merkmalen für jede der Prozesstyp-Gruppen des Weiteren umfasst:
Festsetzen eines statistischen Signifikanzmaßes;
Durchführen einer automatischen Korrelationsanalyse für jede der kategorisierten Zeitreihendaten;
Verwerfen von kategorisierten Zeitreihendaten, die das festgesetzte statistische signifikanzmaß nicht erreichen.

6. Verfahren nach einem der Ansprüche 1 bis 5, wobei das Ermitteln von wenigstens einem Schwellwert für ein Merkmal auf einer Wahrscheinlichkeitsverteilung des Merkmals basiert und eine Kerndichteschätzung umfasst.

7. Verfahren nach einem der Ansprüche 1 bis 6, des Weiteren umfassend:
Erzeugen eines Modells basierend auf einer Gesamtheit aller ermittelten Schwellwerte der Zeitreihen;
Anwenden des Modells in der Maschine; und
Trainieren des erzeugten Modells basierend auf einer Rückmeldung aus der Maschine.

8. Verfahren nach einem der Ansprüche 1 bis 7, wobei die Maschine und/oder ein Prozess der Maschine, die auf Anomalien überwacht wird ist:
eine Überwachung einer Durchflussmenge; oder
eine Leerlaufüberwachung für einen Servo-Antrieb; oder
ein Kettenantrieb für eine Reinigungsmaschine; oder
eine Temperaturüberwachung für Reinigungsmaschine; oder
eine Schwingungsanalyse einer Blasmaschine.

9. Computervorrichtung zum automatischen Erkennen einer Anomalie in einem Maschinenbetrieb, insbesondere für Maschinen zum Abfüllen und Verpacken von Lebensmitteln und/oder Getränken, wobei die Computervorrichtung umfasst:
einen Speicher zum Speichern von Computercode; und
einen Prozessor zum Ausführen des Computercodes, wobei die Computervorrichtung ausgelegt ist zum Ausführen des Verfahrens nach einem der Ansprüche 1 bis 8.

10. System zum automatischen Erkennen einer Anomalie in einem Maschinenbetrieb, insbesondere für Maschinen zum Abfüllen und Verpacken von Lebensmitteln und/oder Getränken, wobei das System umfasst:
wenigstens eine Maschine; und
eine Computervorrichtung gemäß Anspruch 9.
